# FASCICULE DE BREVET EUROPEEN

(11) **EP 0 466 604 B1**
(45) Date de publication et mention de la délivrance du brevet: **05.10.1994**
(21) Numéro de dépôt: 91401950.0
(22) Date de dépôt: 12.07.1991
(51) Int. Cl.: B60G 17/015

(54) **Dispositif de détermination de la position relative de deux pièces montées mobiles l'une par rapport à l'autre, et reliées par au moins un amortisseur téléscopique**
Vorrichtung zur Messung der relativen Lage von 2 zueinander beweglichen Teilen, die durch wenigstens einen teleskopischen Stossdämpfer verbunden sind
Device for measuring the relative position of two relatively movable parts, which are connected by at least one telescopic damper

(30) Priorité: 13.07.1990 FR 9008956
(43) Date de publication de la demande: 15.01.1992
(73) Titulaire: SOCIETE D'APPLICATIONS GENERALES D'ELECTRICITE ET DE MECANIQUE SAGEM, F-75783 Paris Cédex 16 (FR)
(72) Inventeur: Lanoe, Thierry, F-95000 Cergy (FR); Ricouart, Jean-Pierre, F- 95610 Eragny S/Oise (FR)
(74) Mandataire: Bloch, Gérard

(56) Documents cités:
- EP-A- 0 194 493
- EP-A- 0 317 497
- EP-A- 0 339 759
- WO-A-90/12289
- FR-A- 2 562 844
- FR-A- 2 573 200
- FR-A- 2 609 798
- FR-A- 2 609 799
- FR-A- 2 609 800

## Description

La présente invention a pour objet un dispositif de détermination de la position relative de deux pièces montées mobiles l'une par rapport à l'autre et reliées l'une à l'autre par au moins un amortisseur télescopique.

Un tel dispositif trouve notamment son application dans le domaine de l'électronique automobile relatif à la commande de la suspension et de la correction d'assiette. Il permet en effet de connaître en permanence la valeur de la distance entre la roue et la caisse, nécessaire à une commande efficace.

On connaît déjà un tel dispositif. Ainsi, FR-A-2 609 798 enseigne un dispositif de détermination de la position relative de deux pièces montées mobiles l'une par rapport à l'autre et reliées l'une à l'autre par au moins un amortisseur télescopique, comprenant un capteur pour mesurer l'élongation dudit amortisseur, ledit amortisseur comprenant un cylindre dans lequel coulisse un piston, et ledit capteur comprenant :
- une bobine disposée coaxialement à l'intérieur de l'un des éléments cylindre et piston, et fixée à cet élément,
- une tige ferromagnétique fixée à l'autre des dits éléments, et qui pénètre plus ou moins à l'intérieur de la bobine selon l'élongation dudit amortisseur, et,
- des moyens de mesure mesurant l'impédance de la bobine, et comprenant des moyens pour appliquer à la bobine une tension alternative.

La mesure fournie par le dispositif est cependant sensible aux variations de la tension appliquée à la bobine et en particulier à l'échauffement de celle-ci, qui en modifie l'impédance, ce qui nécessite un traitement ultérieur. En outre, il faut disposer de plusieurs bobines, qu'il faut régler, ce qui augmente le coût et le volume tout en comportant un risque de dérive du réglage lorsque certaines des bobines chauffent.

La présente invention vise à pallier cet inconvénient.

A cet effet, elle a pour objet un dispositif du type défini ci-dessus, caractérisé par le fait que les moyens (41,42) pour appliquer la tension alternative sont sensibles aux variations de la tension aux bornes de la bobine par rapport à une référence déterminée et agencés pour lui fournir en réponse un signal maintenant constantes la fréquence et l'amplitude de la tension à ses bornes, et il est prévu des moyens pour mesurer le courant qui traverse la bobine, lesdits moyens pour mesurer le courant qui traverse la bobine comprenant une résistance disposée en série avec la bobine et des moyens de mesure de la tension aux bornes de ladite résistance, ladite résistance étant disposée à l'intérieur dudit amortisseur et suivant la même loi en température que la bobine.

L'amplitude de la tension aux bornes de la résistance, alors directement représentative de l'élongation, est indépendante des variations de la température à l'intérieur de l'amortisseur, qui peuvent être très élevées.

Avantageusement, le piston est creux, la bobine est fixée à l'intérieur du piston et la tige est fixée au fond du cylindre.

Dans ce cas, la présence du capteur à l'intérieur de l'amortisseur n'oblige pas à modifier les dispositifs mécaniques d'amortissement portés par l'extrémité du piston. De plus, dans le domaine automobile, c'est en principe le piston qui est relié à la carrosserie, ce qui facilite les raccordements électriques.

La présente invention sera mieux comprise à la lecture de la description suivante de la forme de réalisation préférée du dispositif de l'invention, faite en se référant aux dessins annexés, sur lesquels :
- la figure 1 représente une vue en coupe d'un amortisseur télescopique pourvu du dispositif de l'invention, et,
- la figure 2 représente un schéma par blocs du circuit électronique du dispositif de la fig. 1.

Pour déterminer la position relative de deux pièces montées mobiles l'une par rapport à l'autre, et reliées l'une à l'autre par au moins un amortisseur télescopique, comme par exemple la carrosserie et les roues d'un véhicule automobile, l'invention propose donc de mesurer l'élongation du ou des amortisseurs télescopiques à l'aide d'un capteur intégré à l'amortisseur.

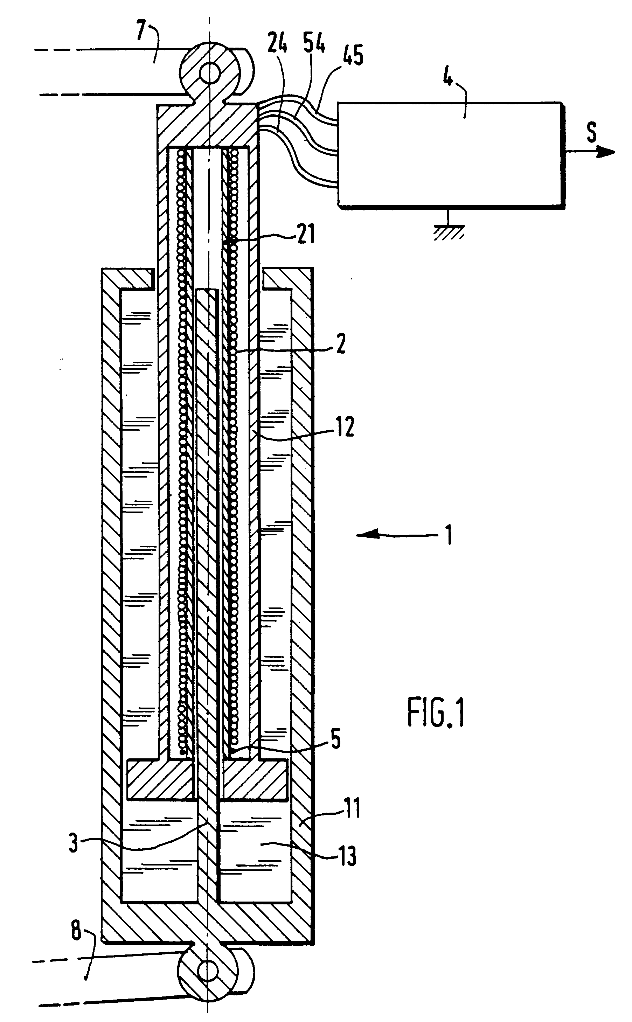

Sur la figure 1, il apparaît que cet amortisseur 1 comprend un cylindre 11 dans lequel coulisse un piston 12 dont les mouvements par rapport au cylindre 11 sont amortis, de façon connue, par un liquide contenu dans le cylindre, par exemple de l'huile 13.

Le piston 12 est relié à une pièce 7 solidaire de la carrosserie, tandis que le cylindre 11 est relié à une pièce 8 solidaire de la roue.

Le piston 12, réalisé en matériau ferromagnétique, est creux. Une bobine 2, en fil de cuivre bobiné sur un manchon 21 en matériau paramagnétique, comme de l'aluminium ou du plastique, est disposée coaxialement à l'intérieur du piston 12, et fixée à celui-ci. La bobine 2 s'étend sur toute la longueur du piston 12.

A l'une des extrémités de bobine 2, et en série avec celle-ci, est disposée une résistance 5 de faible valeur qui, comme cela sera mieux compris dans la suite, permet la mesure du courant qui traverse la bobine 2. La bobine 2 et la résistance 5 sont réalisées pour suivre sensiblement la même loi de température.

Une tige 3 en matériau ferromagnétique est fixée au fond du cylindre 11, et pénètre plus ou moins à l'intérieur de la bobine selon que le piston 12 pénètre lui-même plus ou moins dans le cylindre 11, c'est-à-dire selon l'élongation de l'amortisseur 1.

Des connexions électriques 54, 24 et 45 permettent l'accès au point commun entre la bobine 2 et la résistance 5, à l'extrémité libre de la bobine 2 et à l'extrémité libre de la résistance 5, respectivement.

Les connexions 54, 24 et 45 sont reliées à un circuit électronique de mesure 4, qui délivre un signal électrique S représentatif de l'élongation de l'amortisseur, c'est-à-dire de la distance entre ses deux extrémités.

Avant de décrire la structure du circuit électronique de mesure 4, le fonctionnement d'ensemble du dispositif qui vient d'être décrit est abordé.

Lorsque le piston 12 se déplace par rapport au cylindre 11, la tige 3 pénètre plus ou moins à l'intérieur de la bobine 2, provoquant une variation du circuit magnétique constitué par la tige 3 et le corps creux du piston 12. Il en résulte une variation du coefficient de self-induction, ou inductance, de la bobine 2 qui est mesurée par le circuit 4. Lorsque la bobine 2 a la forme d'un cylindre relativement long par rapport à son diamètre, comme c'est le cas ici, la variation d'inductance de la bobine 2, liée à la pénétration de la tige 3 dans la bobine 2, varie linéairement avec la longueur de pénétration, c'est-à-dire avec l'élongation de l'amortisseur 1. Il en va de même de la valeur de la résistance de la bobine 2, qui représente les pertes ohmiques dans le fil de bobinage, constantes à fréquence constante, et les pertes par courants de Foucault et hystérésis, proportionnelles à la valeur de l'inductance à fréquence constante.

Le circuit électronique 4 est agencé, comme cela sera mieux expliqué dans la suite, pour mesurer les variations d'impédance de la bobine 2, à fréquence constante. Lorsque l'on optimise la valeur de la fréquence, comme cela sera mieux expliqué dans la suite, l'impédance de la bobine 2 varie dans un rapport de quelques unités, typiquement de l'ordre de 3, entre les deux positions extrêmes du piston 12 dans le cylindre 11, c'est-à-dire pour les élongations minimale et maximale de l'amortisseur 1. Ceci procure une excellente dynamique au dispositif de l'invention. Le circuit électrique 4 permet d'exploiter les variations d'impédance de la bobine 2.

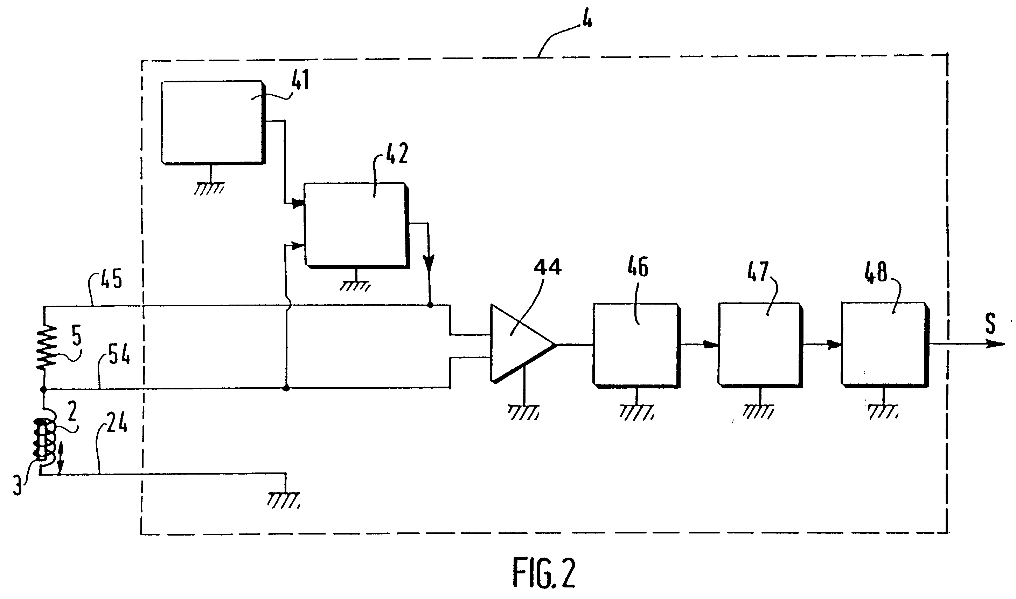

Le circuit électronique 4 est maintenant décrit en référence à la figure 2.

Il comprend tout d'abord un oscillateur 41, qui délivre, à une première entrée d'un circuit d'asservissement 42, un signal de fréquence et d'amplitude constantes. La connexion 54 est reliée à une deuxième entrée du circuit d'asservissement 42, dont la sortie est reliée à la connexion 45.

La connexion 24 est reliée à la masse.

Un amplificateur différentiel 44 dont les entrées sont reliées aux connexions 45 et 54 est suivi d'un filtre passe-haut 46, d'un circuit 47 d'amplification et de suppression des alternances négatives, et d'un filtre passe-bas 48, disposés en cascade dans cet ordre.

Le filtre passe-bas 48 délivre le signal S.

Le fonctionnement du circuit 4 est le suivant. Le circuit d'asservissement 42 compare en permanence l'amplitude de la tension sur la connexion 54 à l'amplitude tension de sortie de l'oscillateur 41 et délivre en sortie un signal de fréquence identique à celle du signal de l'oscillateur 41, dont il commande l'amplitude pour que la tension sur la connexion 54, c'est-à-dire la tension aux bornes de la bobine 2, reste en permanence égale à l'amplitude constante de la tension de sortie de l'oscillateur 41. Ainsi, la bobine est soumise à une tension d'amplitude et de fréquence constantes, quelles que soient les variations de son impédance, de la température, ou de tout autre paramètre. L'amplificateur 44 amplifie la tension aux bornes de la résistance 5, proportionnelle au courant qui la traverse, qui est celui qui traverse la bobine 2. L'amplitude de la tension amplifiée par l'amplificateur 44 est donc représentative de l'admittance, et donc également de l'impédance de la bobine 2, puisque celle-ci est soumise à une tension constante.

Du fait que la résistance 5 et la bobine 2 suivent sensiblement la même loi en température, et du fait que la résistance 5, disposée à l'intérieur de l'amortisseur, est soumise à la même température que la bobine 2, les variations dues à la température sont pratiquement sans influence sur le résultat de la mesure. En effet, la tension aux bornes de la résistance 5 est égale à la tension aux bornes de la bobine 2, multipliée par le quotient de l'impédance de la résistance 5 par l'impédance de la bobine 2. Or, ce quotient est indépendant des variations de température, puisque la résistance 5 et la bobine 2 suivent la même loi en température.

Cette caractéristique est ici particulièrement intéressante car la température de l'huile dans l'amortisseur peut atteindre des valeurs relativement élevées.

Le filtre passe-haut 46, ici du premier ordre, a une fréquence de coupure inférieure à la fréquence de l'oscillateur 41, qui est celle du signal de sortie de l'amplificateur 44. Le filtre passe-haut 46 supprime donc la composante moyenne de ce signal.

Le circuit 47 amplifie et supprime les alternances négatives du signal en sortie du filtre passe-haut 46, tandis que le filtre passe-bas 48, ici du deuxième ordre, ne laisse passer que la valeur moyenne du signal en sortie du circuit 47. La fréquence de coupure du filtre passe-bas 48 est faible vis-à-vis de la fréquence de l'oscillateur 41, et grande vis-à-vis de la fréquence des variations de l'élongation de l'amortisseur, que représente le signal utile S.

Le signal S est envoyé par exemple au circuit de commande de la suspension, en vue de la correction d'assiette, par exemple.

Pour choisir la valeur optimale de la fréquence de l'oscillateur 41, on établit expérimentalement la courbe de la dynamique du dispositif en fonction de la fréquence.

Pour ce faire, pour chacune des valeurs d'une pluralité de valeurs de la fréquence réparties sur une plage, on mesure la dynamique, c'est-à-dire la différence entre les valeurs du signal S pour l'élongation minimale et pour l'élongation maximale de l'amortisseur 1.

On choisit ensuite, comme fréquence optimale celle qui conduit à la dynamique la plus élevée.

Naturellement, la présente invention n'est pas limitée à la description qui vient d'être faite. Notamment, il est à la portée de l'homme du métier de prévoir un circuit électronique 4 susceptible d'effectuer périodiquement par exemple, un diagnostic du bon fonctionnement du capteur, ou encore susceptible de dialoguer avec un calculateur de bord par l'intermédiaire d'une ligne série, par exemple.

De même, le dispositif de l'invention peut être utilisé non seulement dans le domaine automobile, mais aussi pour toute application mettant en oeuvre des amortisseurs télescopiques, dans laquelle il est nécessaire de déterminer la position relative des deux pièces reliées par un tel amortisseur.

## Revendications

1. Dispositif de détermination de la position relative de deux pièces montées mobiles l'une par rapport à l'autre et réliées l'une à l'autre par au moins un amortisseur télescopique, comprenant un capteur (2,3,4) pour mesurer l'élongation dudit amortisseur (1), ledit amortisseur (1) comprenant un cylindre (11) dans lequel coulisse un piston (12), et ledit capteur comprenant :
- une bobine (2) disposée coaxialement à l'intérieur de l'un des éléments cylindre (11) et piston (12), et fixée à cet élément,
- une tige (3) ferromagnétique fixée à l'autre des dits éléments, et qui pénètre plus ou moins à l'intérieur de la bobine (2) selon l'élongation dudit amortisseur (1), et,
- des moyens de mesure (4) mesurant l'impédance de la bobine (2), et comprenant des moyens (41,42) pour appliquer à la bobine (2) une tension alternative, caractérisé par le fait que les moyens (41,42) pour appliquer la tension alternative sont sensibles aux variations de la tension aux bornes de la bobine par rapport à une référence déterminée et agencés pour lui fournir en réponse un signal maintenant constantes la fréquence et l'amplitude de la tension à ses bornes et il est prévu des moyens (5,44,46,47,48) pour mesurer le courant qui traverse la bobine (2), lesdits moyens (5,44,46,47,48) pour mesurer le courant qui traverse la bobine (2) comprenant une résistance (5) disposée en série avec la bobine (2) et des moyens (44,46,47,48) de mesure de la tension aux bornes de ladite résistance (5), ladite résistance (5) étant disposée à l'intérieur dudit amortisseur (1) et suivant la même loi en température que la bobine (2).

2. Dispositif selon la revendication 1, dans lequel le piston (12) est creux, la bobine (2) est fixée à l'intérieur du piston (12) et la tige (3) est fixée au fond du cylindre (11).

## Claims

1. Device to determine the relative position of two mobile parts assembled in relation to one another and linked to one another by means of a telescopic dampening device comprising a sensor (2, 3, 4) to measure the elongation of the said dampening device (1), the said dampening device comprising a cylinder (11) in which a piston (12) slides, with the said sensor comprising:-
- a coil (2) laid coaxially within one of the elements of the cylinder (11) and piston (12), and fixed to this element,
- a ferromagnetic rod (3) fixed to the other of the said elements, and which penetrates more or less the interior of the coil (2) according to the elongation of the said dampening device (1) and,
- measuring means which measure the impedance of the coil (2) and comprising means (41, 42) to apply an alternated voltage to the coil (2), characterised by the fact that the means (41, 42) to apply the alternated voltage are sensitive to variations in the voltage at the coil terminals in relation to a determined reference and equipped to supply it with a signal in response maintaining the voltage frequency and the amplitude constant at its terminals and means are planned (5, 44, 46, 47, 48) to measure the current which crosses the coil (2), the said means (5, 44, 46, 47, 48) to measure the current which crosses the coil (2) comprising a resistor (5) laid in series with the coil (2) and the means (44, 46, 47, 48) which measure the voltage at the terminals of the said resistor (5), the said resistor (5) being located in the interior of the said dampening device (1) and follows the same law of temperature as the coil (2).

2. Device according to claim 1, in which the piston (12) is hollow, the coil (2) is fixed to the interior of the piston (12) and the rod (3) is fixed to the base of the cylinder (11).

## Patentansprüche

1. Vorrichtung zur Messung der relativen Lage von zwei zueinander beweglichen Teilen, die durch wenigstens einen teleskopischen Stoßdämpfer verbunden sind, umfassend einen Fühler (2,3,4) zum Messen der Dehnung des besagten Stoßdämpfers (1), wobei der besagte Stoßdämpfer (1) einen Zylinder (11) umfaßt, in welchem ein Kolben (12) gleitet, und wobei der besagte Fühler umfaßt:
- eine Spule (2), welche koaxial im Inneren eines der Elemente Zylinder (11) oder Kolben (12) angeordnet und an diesem Element befestigt ist,
- einen ferromagnetischen Stift (3), der an dem anderen der besagten Elemente befestigt ist und mehr oder weniger in das Innere der Spule (2) eindringt, je nach Dehnung des besagten Stoßdämpfers (1) und
- Mittel (4) zum Messen der Impedanz der Spule (2) und Mittel (41,42), um die Spule (2) an Wechselspannung zu legen, dadurch gekennzeichnet, daß die Mittel (41,42) zum Anlegen der Wechselspannung empfindlich für die Spannungsschwankungen an den Spulenklemmen in Bezug auf eine festgelegte Bezugsspannung sind und der Spule als Reaktion ein Signal zu liefern, welches Frequenz und Amplitude der Spannung an ihren Klemmen konstant hält und es sind Mittel (5,44,46,47,48) zum Messen des die Spule (2) durchfließenden Stromes vorgesehen, wobei die besagten Mittel (5,44,46,47,48) zum Messen des die Spule (2) durchfließenden Stromes einen mit der Spule (2) in Serie angeordneten Widerstand (5) umfassen und Mittel (44,46,47,48) zum Messen der Spannung an den Klemmen des besagten Widerstandes (5), wobei der besagte Widerstand (5) im Inneren des besagten Stoßdämpfers (1) angeordnet ist und den gleichen Temperaturverlauf wie die Spule (2) aufweist.

2. Vorrichtung gemäß Anspruch 1, bei welcher der Kolben (12) hohl ist, die Spule (2) im Inneren des Kolbens (12) befestigt ist und der Fühler (3) am Boden des Zylinders (11) befestigt ist.
